# EUROPEAN PATENT SPECIFICATION

(11) **EP 0 774 380 B1**
(45) Date of publication and mention of the grant of the patent: **05.09.2001**
(21) Application number: 96830512.8
(22) Date of filing: 08.10.1996
(51) Int. Cl.: B60Q 11/00, B60Q 1/46

(54) **Improved-wiring device for controlling the emergency lights in motor vehicles**
Elektrische Verdrahtungseinrichtung zur Kontrolle von Fahrzeugsnotlichten
Dispositif de cablage pour le contrôle des feux de détresse d'un véhicule

(30) Priority: 15.11.1995 IT MI952345
(43) Date of publication of application: 21.05.1997
(73) Proprietor: CAVIS S.r.l., I-15023 Felizzano (Alessandria) (IT)
(72) Inventor: Colombo, Paolo, c/o Cavis S.r.l., 15023 Felizzano (Alessandria) (IT)
(74) Representative: Cicogna, Franco

(56) References cited:
- DE-A- 1 630 949
- DE-A- 2 634 697
- GB-A- 2 297 866

## Description

### BACKGROUND OF THE INVENTION

The present invention relates to an improved-wiring device for controlling the emergency lights in motor vehicles.

As known, the direction indicating an emergency light assembly on a motor vehicle usually comprises direction controls which are conventionally arranged on a direction control arm, a separated lamp control module as well as an emergency push-button and the direction lights or lamps.

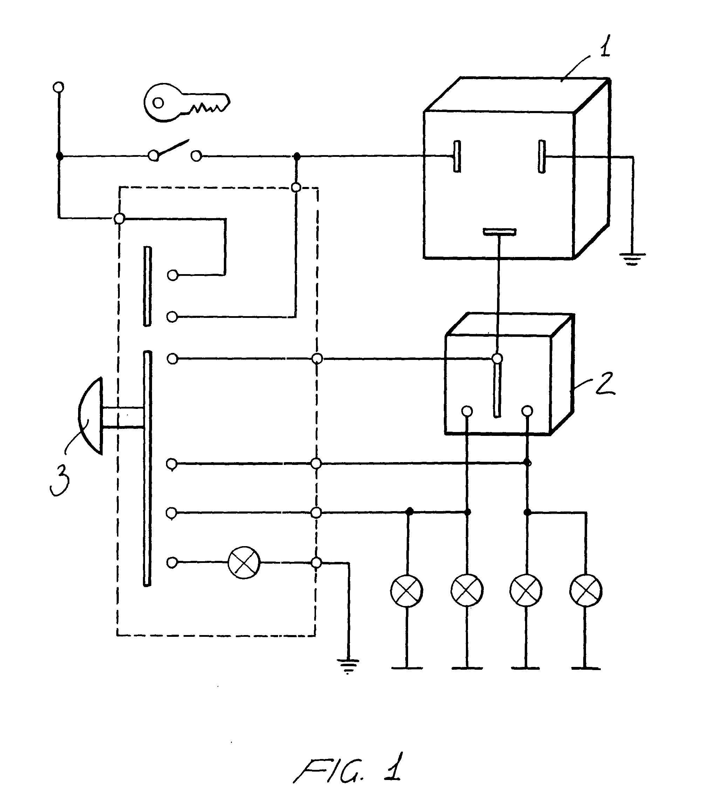

Such an assembly, as is shown in figure 1, essentially comprises a lamp switching on and off module, indicated by the reference number 1, which constitutes a separated unit to be interconnected between the direction control assembly 2 and the emergency push-button 3, so as to electrically connect the direction lights or lamps.

Such a construction requires a very complex wiring to be provided by the motor vehicle maker in the assembling operation of the motor vehicle itself.

The document DE 2 634 697 A discloses a device substantially according to the preamble of claim 1.

### SUMMARY OF THE INVENTION

Accordingly, the aim of the present invention is to overcome the above mentioned drawback, by providing a control device for controlling the emergency lights in a motor vehicle, which can be wired in very simple manner, while having a very reduced size and being very reliable in operation.

Within the scope of the above mentioned aim, a main object of the present invention is to provide such a light control device which allows the light or lamp life to be increased, and this by preventing any over-voltages from being applied to the emergency lights or lamps.

Another object of the present invention is to provide such an emergency lamp control device which allows the motor vehicle to be quickly and easily fitted for application of a trailer, and this by means of a simple replacing operation in which an electromechanic push-button provided with an integrated electronics is replaced by a push-button specifically designed for a trailer.

Yet another object of the present invention is to provide such an emergency light control device which can be easily made starting from easily available elements and materials.

According to one aspect of the present invention, the above mentioned aim and objects, as well as yet other objects, which will become more apparent hereinafter, are achieved by an improved-wiring device for controlling the emergency lights in motor vehicles, according to claim 1.

### BRIEF DESCRIPTION OF THE DRAWINGS

Further characteristics and advantages of the present invention will become more apparent hereinafter from the following detailed disclosure of a preferred, though not exclusive, embodiment of a device for controlling the emergency lights in a motor vehicle, of a simplified wiring type, and being illustrated, by way of an indicative, but not limitative example, in the figures of the accompanying drawings, where:
Figure 1 illustrates a control device according to the prior art;

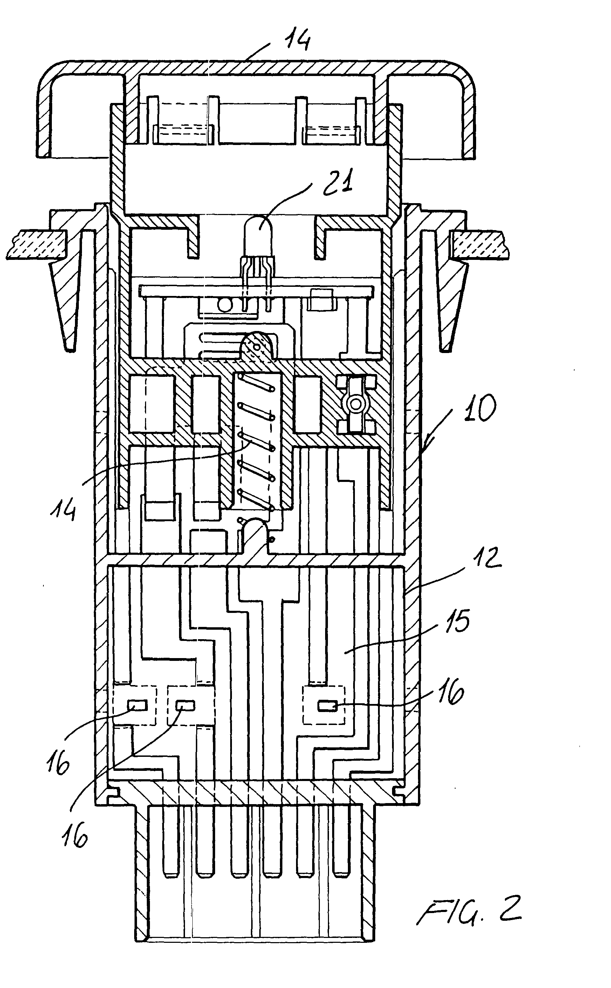

Figure 2 is a cross-sectional view illustrating the emergency switch included in the emergency light control device according to the present invention;

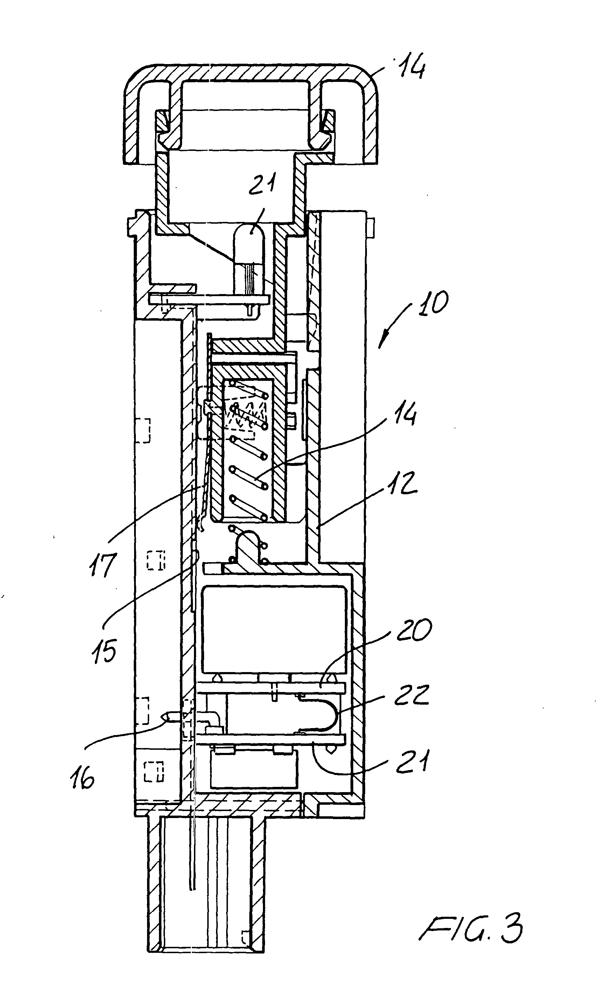

Figure 3 illustrates the emergency switch as cross-sectioned along a plane perpendicular to the plane of Figure 2, and

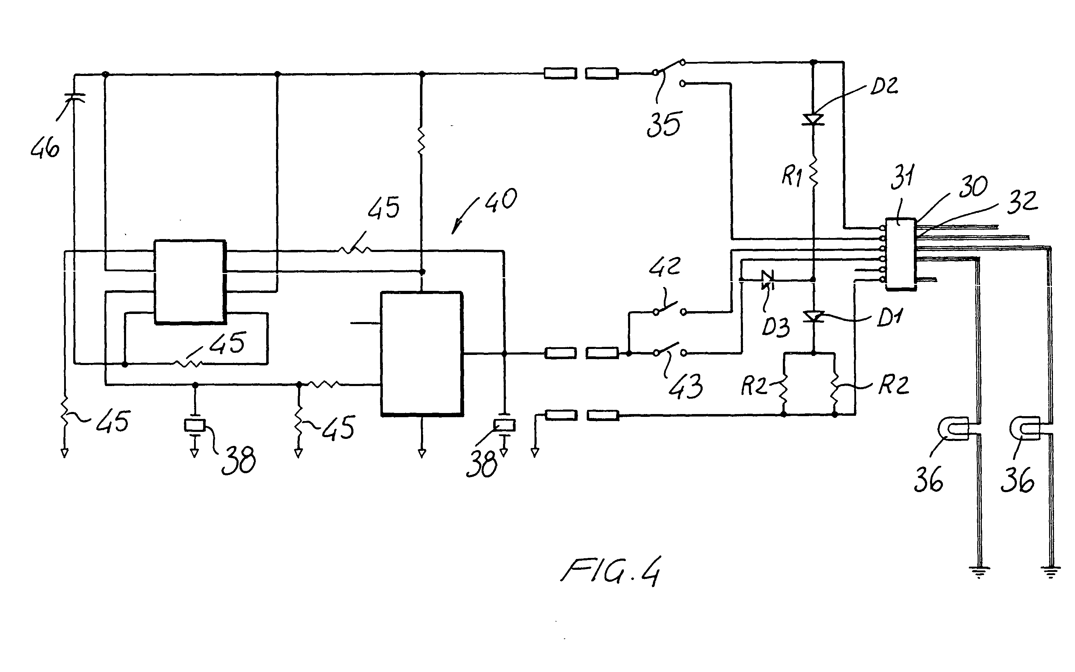

Figure 4 illustrates an electric diagram of the device according to the invention.

### DESCRIPTION OF THE PREFERRED EMBODIMENT

With reference to the above mentioned figures, the improved or simplified wiring control device for controlling the emergency lights on a motor vehicle, according to the present invention, comprises an actuating push-button, generally indicated by the reference number 10, which is provided with an outer body 12 therewith is associated a movable push-button 13 which can be displaced against the biassing of a spring 14.

On the body 12 is provided an electric circuit 15, which is made of cut-out copper tracks and which is directly co-printed on the body 12 the fixed contacts providing both the inner contacting part and the outer contacting part.

Those same pins 16 allowing the interconnection with the electronic board are made by shearing or cutting the contacts.

On the printed board 15 is provided a sliding contact 17, comprising a resilient blade element which is rigid with the mechanism of the push-button 13.

The electronic board is directly supported inside the body 12 and is alternately power-supplied by the starting key through the contact 30, as provided on the connector holder 31 or through the power supply battery 32 connected to said connector holder.

The operation with the power supply battery is performed as the starting key is in its off position.

An inner contact 35 is moreover provided which, depending on its position, will allow the emergency lights or lamps, indicated by the reference number 36, to be power supplied from the two different power supplies.

Such an arrangement would prevent the direction lights from being actuated with the key being in its off condition and the motor vehicle engine in its off condition, thereby allowing the possibility of greatly reducing the absorbed current amount as the key is off and the emergency push-button is not actuated.

The electronic circuity comprises moreover a surface mounted custom integrated circuit or IC, a self-protected MOSFET power transistor, also surface mounted, as well as piezoelectric buzzers 38, of reduced size, which can be located as desired.

According to the invention the electronic board comprises a rigid printed circuit board 20 and a second rigid printed circuit 21, which are connected to one another by a flexible printed circuit board 22, so as to practically define a book-like configuration.

On the printed circuit board 20 are provided three interconnection terminals for providing interconnection with the electric circuitry 15.

On the facing rigid printed circuit boards are soldered the above mentioned components, and the electrical connection thereof being performed through the flexible printed circuit board.

As stated, the assembly can be power supplied either through the starting key, by the contact 35, or through the motor vehicle battery, by suitably locating the contact 35.

As shown, to the connector are coupled both the left and right lights or lamps, both indicated by the reference number 36.

As the emergency lights or lamps are switched-on, the integrated circuit indicated by the reference number 40 will be power-supplied and will send a switched on-switched off signal to a solid status relay, constituting the control element of the lights or emergency lamps, as well as a protecting elements for protecting against overcurrents and wiring shorts.

As the contacts of the contactors 42 and 43 are coupled to one another, they will power supply the direction lights, either at the left or at the right, depending, of course, on the control by the direction assembly.

The custom integrated circuit is coupled to resistors, indicated by the reference number 45, provided for protecting the integrated circuit from damages and to a capacitor 46, for setting the emergency lights switching-on and off frequency.

In particular, as the direction lights are energized, the LED D1 will be power supplied so as to illuminate the push-button, to provide a night visibility capability, together with its protecting resistor R2 through the diode D2 and respective resistor R1 provided for reducing the light amount of the LED and preventing any return of current to the connector and, accordingly, to the remaining part of the system.

As the emergency light are energized, the LED D1 will be directly power supplied through its protecting resistor R2, through the diode D3, thereby illuminating the indicating mark or ideogram provided on the push-button, in a synchronous manner with the emergency lamp or light switching-on and off operation.

The custom integrated circuit has the main feature that it would be able to provide a double frequency in the case of an interruption of the lamp, while allowing to monitor the current absorbed by the lamps, as well as allowing the possibility of easily generating the electronic ticking signal.

Finally, the buzzers or resonating devices 38 can be alternately connected, as previously mentioned, in two positions, depending on the sound level to be required.

From the above disclosure it should be apparent that the invention fully achieves the intended aim and objects.

In particular, the fact is to be pointed out that an emergency light control device has been provided in which the emergency light control elements is directly integrated in the emergency push-button, which can be easily disengaged for replacement with a push-button specifically designed for motor vehicles provided with a trailer assembly.

In particular, the push-button can be disengaged from the front of the motor vehicle instrument panel without disassembling the latter.

The invention as disclosed is susceptible to several modificatons and variations all of which will come within the scope of the inventive idea.

Moreover, all of the details can be replaced by other technically equivalent elements.

In practicing the invention, the used materials, as well as the contingent size and shapes, can be any, depending on requirements.

## Claims

1. An improved-wiring device for controlling the emergency lights in motor vehicles, in particular for motor vehicle trailers, comprising an actuating push-button (10) housing therein electronic components for controlling said emergency lights as well as the switching-on and off frequency thereof, said electronic components being moreover adapted to generate an electronic ticking signal, **characterized in that** said device further comprises inside a body (12) of said push-button (10), a first rigid printed circuit board (20) and a second rigid printed circuit board (21), said first and second rigid printed boards (20, 21) being connected by a flexible printed circuit board (22) and arranged in a substantially book-like configuration.

2. A device according to Claim 1, **characterized in that** said electronic components are supported by a printed circuit board (15) which is directly soldered on the body (12) of the push-button (10) said printed circuit board (15) including electronic tracks which are formed by a co-printing operation on said push-button (10).

3. A device according to Claim 1, **characterized in that** said electronic components comprise a custom integrated circuit (40).

4. A device according to Claim 1 and 2, **characterized in that** said device further comprises, integrated in the push-button (10), a solid status relay, assembled on the same printed circuit board (15) on which is mounted said custom integrated circuit.

5. A device according to one or more of the preceding claims, **characterized in that** said push-button (10) can be withdrawn from the instrument panel of the motor vehicle, without the need of disassembling said instrument pedal.

## Patentansprüche

1. Elektrische Verdrahtungseinrichtung zur Kontrolle von Fahrzeugnotbeleuchtungen, insbesondere für Kraftfahrzeuganhänger, die einen Betätigungs-Tastschalter (10) aufweist, in dem elektronische Komponenten zur Kontrolle der Notleuchte sowie von deren Anschalt- und Ausschaltfrequenz untergebracht sind, wobei die elektronischen Komponenten darüber hinaus so angepaßt sind, daß sie ein elektronisches Ticksignal erzeugen,
**dadurch gekennzeichnet**, daß
die Einrichtung weiterhin innerhalb eines Körpers (12) des Tastschalters (10) eine erste starre Leiterplatte (20) und eine zweite starre Leiterplatte (21) aufweist, wobei die erste und die zweite starre. Leiterplatte (20, 21) mittels einer flexiblen Leiterplatte (22) verbunden, und in einer im wesentlichen buchähnlichen Konfiguration angeordnet ist.

2. Einrichtung nach Anspruch 1,
**dadurch gekennzeichnet**, daß
die elektronischen Komponenten durch eine Leiterplatte (15) getragen sind, die direkt auf den Körper (12) des Tastschalters (10) gelötet ist, wobei die Leiterplatte (15) elektronische Spuren aufweist, die durch einen gleichzeitigen Druckvorgang auf dem Tastschalter (10) ausgebildet sind.

3. Einrichtung nach Anspruch 1,
**dadurch gekennzeichnet**, daß
die elektronischen Komponenten eine benutzerintegrierte Schaltung (40) umfassen.

4. Einrichtung nach den Ansprüchen 1 und 2,
**dadurch gekennzeichnet**, daß
die Einrichtung weiterhin ein in den Tastschalter (10) integriertes Festzustandsrelais umfaßt, das auf derselben gedruckten Leiterplatte (15) montiert ist, auf der die benutzerintegrierte Schaltung angebracht ist.

5. Einrichtung nach einem oder mehreren der vorangegangenen Ansprüche,
**dadurch gekennzeichnet**, daß
der Tastschalter (10) von der Armaturentafel des Kraftfahrzeuges ohne die Notwendigkeit einer Demontage der Armaturentafel entfernbar ist.

## Revendications

1. Dispositif perfectionné ou simplifié pour contrôler les feux d'urgence des véhicules motorisés, en particulier pour les remorques des véhicules motorisés, comprenant un interrupteur de mise en marche (10) contenant des composants électroniques pour contrôler lesdits feux d'urgence ainsi que la fréquence marche-arrêt, lesdits composants électroniques étant de plus adaptés pour générer un signal électonique clignotant ( « ticking signal » ), **caractérisé en ce que** ledit dispositif comprend à l'intérieur d'un élément (12) dudit interrupteur (10), une première plaque de circuik imprimé rigide (20) et une deuxième plaque de circuit imprimé rigide (21), appelées ci après première et deuxième plaques (20, 21) lesdites plaques étant connectées par une plaque de circuit imprimé flexible (22) et arrangées en une configuration en forme de livre.

2. Dispositif selon la revendication 1, **caractérisé en ce que** lesdits composants électroniques sont supportés par une plaque de circuit imprimé (15) qui est directement soudée sur l'élément (12) de l'interrupteur (10), ladite plaque de circuit imprimé (15) incluant des bandes électroniques qui sont formées par une opération de co-impression sur ledit interrupteur (10).

3. Dispositif selon la revendication 1, **caractérisé en ce que** lesdits composants électroniques comprennent un circuit intégré personnalisé (40).

4. Dispositif selon les revendications 1 et 2, **caractérisé en ce que** ledit dispositif comprend de plus un interrupteur intégré (10), un relais d'état solide, assemblés sur la même plaque de circuit imprimé (15) sur laquelle est monté ledit circuit intégré personnalisé.

5. Dispositif selon l'une quelconque des revendications précédentes, **caractérisé en ce que** ledit interrupteur (10) peut être retiré du tableau de bord du véhicule motorisé, sans qu'il soit nécessaire de désassembler ledit tableau de bord.
